Europäisches Patentamt

European Patent Office

Office européen des brevets

(19)

(11) EP 0 562 985 B1

(12) FASCICULE DE BREVET EUROPEEN

(45) Date de publication et mention
de la délivrance du brevet:
**22.05.1996 Bulletin 1996/21**

(51) Int Cl.⁶: **H02M 5/257**

(21) Numéro de dépôt: **93420136.9**

(22) Date de dépôt: **25.03.1993**

(54) **Procédé de variation de puissance dans une charge branchée sur le secteur**

Verfahren zur Leistungsänderung in eine am Netz angeschlossene Last

Power variation method in a load connected to the network

(84) Etats contractants désignés:
**AT BE CH DE DK ES FR GB GR IE IT LI LU MC NL PT SE**

(30) Priorité: **27.03.1992 FR 9204131**

(43) Date de publication de la demande:
**29.09.1993 Bulletin 1993/39**

(73) Titulaire: **SGS-THOMSON MICROELECTRONICS S.A.**
**F-94250 Gentilly (FR)**

(72) Inventeurs:
• **Rabier, Philippe**
**F-37300 Joue-Les-Tours (FR)**
• **Perier, Laurent**
**F-13100 Aix En Provemce (FR)**

(74) Mandataire: **de Beaumont, Michel**
**1bis, rue Champollion**
**F-38000 Grenoble (FR)**

(56) Documents cités:
**EP-A- 0 381 789**

## Description

La présente invention concerne les vatiateurs de puissance comprenant un interrupteur commandable tel qu'un triac, pour des charges branchées sur le secteur. On considère plus particulièrement de tels variateurs dans lesquels la variation de puissance est réalisée en commutant la charge sur le secteur pendant des portions variables de chaque alternance du secteur.

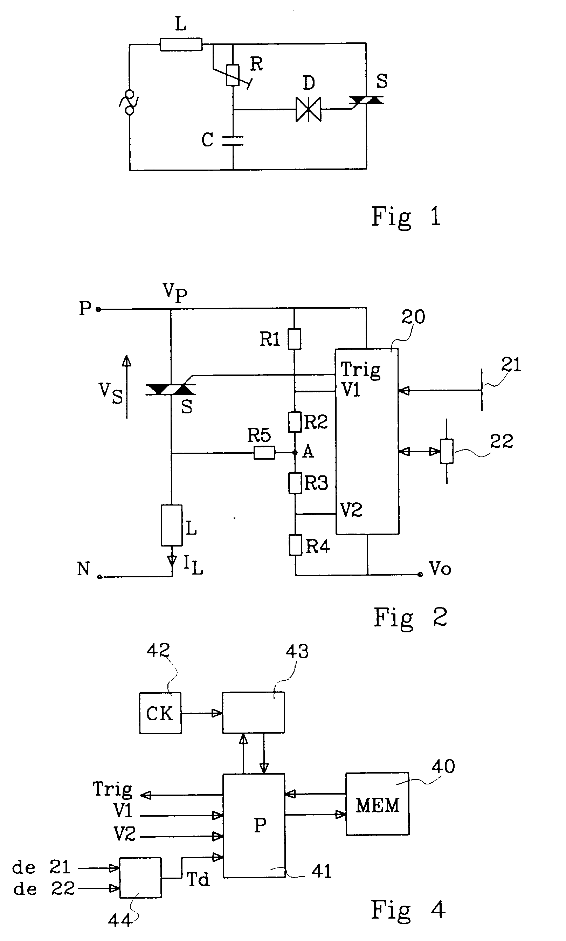

La figure 1 représente un schéma simplifié de variateur de puissance. Une charge L est reliée au secteur par l'intermédiaire d'un triac S. Le déclenchement du triac S est retardé par rapport aux passages à zéro de la tension du secteur grâce à un circuit retardeur comprenant une résistance variable R et une capacité C branchées en série avec la charge L sur le secteur. Un diac D relie la gâchette du triac S au point commun entre la résistance R et la capacité C. Ainsi, selon la valeur de la résistance R, le triac S est déclenché à chaque alternance avec un retard plus ou moins grand par rapport aux instants de passage à zéro de la tension du secteur.

Ce circuit présente l'avantage d'être simple et assez insensible aux perturbations de la tension du secteur. En effet, le réseau RC constitue un filtre passe-bas qui empêche le passage d'impulsions parasites qui pourraient intempestivement le triac S. On trouve souvent ce genre de circuit monté à la place des interrupteurs domestiques d'éclairage. Toutefois, ce circuit se comporte assez mal avec des charges inductives.

Un tel circuit est décrit dans la demande de brevet EP-A-381789.

Il existe actuellement des variateurs plus complexes qui fonctionnent mieux avec des charges inductives et qui offrent un certain nombre de perfectionnements, comme par exemple un démarrage en douceur lié à une commande par touche sensitive qui, selon la durée d'effleurement, permet d'établir, d'interrompre ou de faire varier la puissance dans la charge.

Ces variateurs utilisent généralement des circuits intégrés spécialisés en technologie analogique qui nécessitent un grand nombre de composants externes encombrants tels que des condensateurs de filtrage des impulsions parasites du secteur, des condensateurs pour fixer la constante de temps du démarrage en douceur, etc. Ces variateurs sont donc chers à la fabrication et, vu leur encombrement, ils sont difficilement montables à la place des interrupteurs domestiques.

Pour réduire le coût et l'encombrement d'un tel variateur, on pourrait envisager de réaliser la plupart de ses fonctions sous forme numérique. Mais les circuits numériques présentent généralement l'inconvénient d'être très sensibles aux parasites.

Un objet de la présente invention est de prévoir un variateur de puissance à commande numérique s'affranchissant du problème des parasites du secteur et ne nécessitant qu'un faible nombre de composants externes.

Cet objet ainsi que d'autres de la présente invention est atteint grâce à un procédé de variation de puissance pour une charge branchée sur le secteur au moyen d'un interrupteur commandé dont la commande est retardée d'un intervalle de temps de consigne par rapport à l'instant de fourniture d'une impulsion de synchronisation sur le secteur. Selon l'invention, le procédé comprend les étapes suivantes : a) détecter une impulsion de synchronisation, déterminant le début d'un cycle, dans un intervalle de temps fixe appartenant au cycle précédent ; b) dès la détection de l'impulsion de synchronisaton, attendre la fin de cet intervalle fixe puis décompter un premier intervalle de temps qui se termine sensiblement à un instant correspondant à l'instant d'arrivée de l'impulsion de synchronisation additionné de l'intervalle de consigne ; c) à la fin du premier intervalle, déclencher la fermeture de l'interrupteur et décompter un deuxième intervalle de temps qui se termine avant l'arrivée normale de l'impulsion de synchronisation suivante ; et d) à la fin du deuxième intervalle, décompter l'intervalle fixe dans lequel on doit détecter l'impulsion de synchronisation suivante.

Selon un mode de réalisation de la présente invention, le deuxième intervalle de temps débute par un troisième intervalle de temps d'une demi-période nominale du secteur, à la fin duquel la fermeture de l'interrupteur est également déclenchée.

Selon un mode de réalisation de la présente invention, à partir de l'étape b), le procédé comprend les étapes suivantes : mesurer le temps restant s'écoulant entre l'arrivée de l'impulsion de synchronisation et la fin de l'intervalle de temps fixe appartenant au cycle précédent ; calculer l'écart entre le temps restant et une moyenne de temps restants prise sur un nombre prédéterminé (K) de cycles précédents ; et, pour le cycle suivant (n+1), corriger le premier intervalle de temps d'une fraction déterminée dudit écart et calculer la nouvelle moyenne.

Selon un mode de réalisation de la présente invention, la fraction déterminée est un $K^e$ dudit écart.

Selon un mode de réalisation de la présente invention, la commande de l'interrupteur est arrêtée si une impulsion de synchronisation n'arrive pas pendant l'intervalle de temps fixe.

La présente invention prévoit aussi un dispositif pour la mise en oeuvre du procédé selon l'invention. Le dispositif est essentiellement constitué d'un microcontrôleur comprenant : des moyens de détection des impulsions de synchronisation ; des moyens pour mémoriser les premier et deuxième intervalles de temps, l'intervalle de temps fixe, le temps restant, l'intervalle de consigne et la moyenne ; des moyens pour ajuster la valeur de l'intervalle de consigne en fonction de commandes externes, et pour initialiser le temps restant, la moyenne et les premier et deuxième intervalles ; un compteur programmable dans lequel sont successivement chargés et décomptés au rythme d'une horloge interne les premier et deuxième intervalles et l'intervalle de temps fixe, l'état du compteur étant lu pendant l'intervalle de temps fixe pour fournir le temps restant ; et des moyens de calcul pour calculer la moyenne en fonction des variations du temps restant, pour ajuster la valeur du premier intervalle en fonction de l'intervalle de consigne et de la moyenne, et pour ajuster la valeur du deuxième intervalle en fonction de l'intervalle de consigne.

Ces objets, caractéristiques et avantages ainsi que d'autres de la présente invention seront exposés plus en détail dans la description suivante de modes de réalisation particuliers faite en relation avec les figures jointes parmi lesquelles :

la figure 1, précédemment décrite, illustre un circuit variateur de l'art antérieur ;
la figure 2 représente un mode de réalisation d'un variateur selon la présente invention utilisant un microcontrôleur ;
la figure 3 représente des tensions et un courant relatifs à des éléments de puissance du variateur de la figure 2, et des signaux de synchronisation et de commande utilisés dans ce variateur ; et
la figure 4 représente schématiquement les principaux éléments du microcontrôleur utilisé dans le circuit de la figure 2.

La figure 2 représente un variateur mettant en oeuvre le procédé selon la présente invention. Une charge L est branchée au neutre N du secteur et reliée à une phase P du secteur par l'intermédiaire d'un triac S. Le circuit de commande comprend un microcontrôleur 20 convenablement programmé, un pont diviseur de quatre résistances R1 à R4, une résistance R5, une touche sensitive 21 et/ou un potentiomètre 22.

Le circuit de commande est alimenté par la phase P du secteur qui est à un potentiel $V_P$ et par un potentiel V0 inférieur à $V_P$ de, par exemple, 5V obtenu à partir du secteur par un circuit classique à capacité et diode Zener, non représenté.

Les première (R1) et dernière (R4) résistances du pont sont respectivement reliées au potentiel $V_P$ et au potentiel V0. La résistance R5 comporte une borne reliée au point commun entre le triac et la charge L et une borne reliée au point commun A entre la résistance R2 et la résistance R3 du pont diviseur.

Le microcontrôleur 20, également alimenté par les potentiels $V_P$ et V0, reçoit un signal venant d'une touche sensitive 21, un signal délivré par un potentiomètre optionnel 22, et des signaux V1 et V2 recueillis respectivement au point commun entre la résistance R1 et la résistance R2 et au point commun entre la résistance R3 et la résistance R4. Le microcontrôleur fournit un signal de commande Trig au triac S.

Le rôle des résistances R1 à R5, notamment des signaux V1 et V2, sera exposé plus loin.

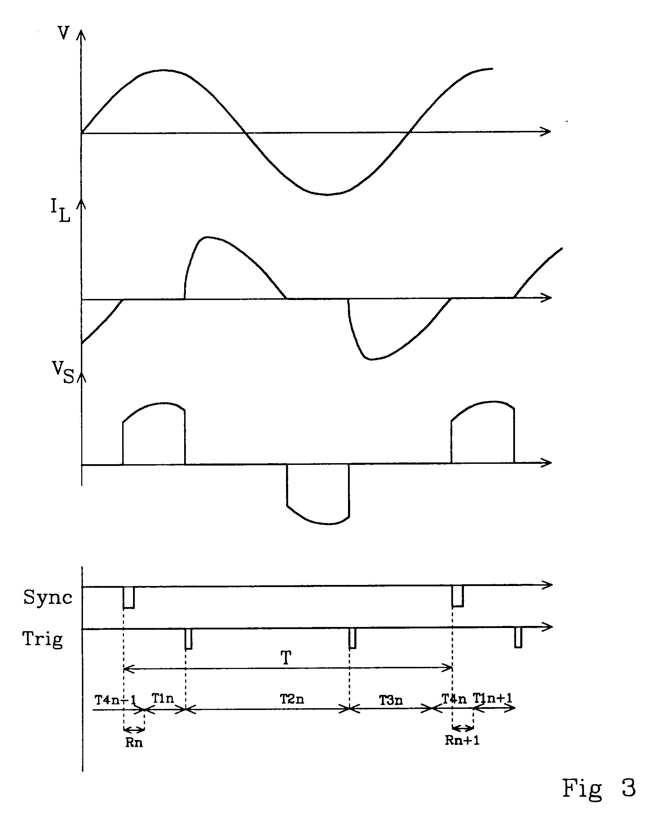

La figure 3 permet d'illustrer le fonctionnement du variateur selon la présente invention et notamment du microcontrôleur 20, qui pourrait aussi être remplacé par un circuit logique câblé, qui permet la réalisation des étapes du procédé selon l'invention. Elle représente, pour un cycle de fonctionnement (n), la tension V du secteur, le courant $I_L$ à travers la charge, la tension $V_S$ aux bornes du triac S, des impulsions de synchronisation Sync utilisées dans le microcontrôleur 20 et des impulsions de commande Trig fournies à la gâchette du triac S par le microcontrôleur.

On suppose qu'initialement la période du secteur est égale à sa valeur nominale et qu'une impulsion de synchronisation Sync est régulièrement fournie à chaque période du secteur au moment des passages par zéro par valeur négative du courant $I_L$ dans la charge L d'une manière expliquée plus loin. Chacune des impulsions Sync détermine le début d'un cycle.

Si, pendant cette période initiale, l'on considère un cycle n correspondant sensiblement à une période, on décompose, selon l'invention, ce cycle en :

- des intervalles de temps $R_n$ et $T1_n$ à la fin desquels on fournit une première impulsion de commande Trig ; la durée $R_n + T1_n$ est initialement choisie en fonction de la commande appliquée au microcontrôleur 20 pour correspondre à une valeur Td déterminée par l'opérateur agissant sur la touche sensitive 21 ou le potentiomètre 22 pour fixer un déphasage désiré entre l'impulsion de synchronisation et l'impulsion de déclenchement ;
- un intervalle de temps $T2_n$ à la fin duquel on fournit une deuxième impulsion de commande destinée à la commande de mise en conduction de l'alternance suivante ; l'intervalle de temps $T2_n$ séparant deux impulsions de commande est fixé à l'origine par le microcontrôleur pour correspondre à la durée d'une alternance nominale du secteur ;
- un intervalle de temps $T3_n$ à la fin duquel on initialise le décomptage d'un intervalle de temps fixe $T4_n$ au cours duquel on cherche à détecter la présence de l'impulsion de synchronisation suivante. L'intervalle de temps $T3_n$ est choisi de sorte que la somme des intervalles de temps $R_n$, $T1_n$, $T2_n$ et $T3_n$ ait une valeur légèrement inférieure à la période nominale T. L'intervalle de temps $T4_n$ est choisi de sorte que la somme des intervalles de temps $R_n$, $T1_n$, $T2_n$, $T3_n$ et $T4_n$ ait une valeur légèrement supérieure à la période nominale T.

Ainsi, l'intervalle $T3_n$ se termine avant la fin nominale du cycle, c'est-à-dire avant l'arrivée normale de l'impulsion de synchronisation suivante. La présence de l'impulsion de synchronisation est recherchée pendant l'intervalle de temps fixe $T4_n$ et elle arrive normalement au bout d'un intervalle de temps $T4_n-R_0$ s'il n'y a pas eu de fluctuations du secteur, $R_0$ étant la valeur initiale des intervalles R. L'arrivée de l'impulsion de synchronisation initialise le cycle suivant.

Le fait de détecter les impulsions de synchronisation pendant un intervalle T4 qui est petit devant la période T rend le procédé peu sensible aux fluctuations du secteur. En effet, un parasite du courant $I_L$ qui provoquerait une impulsion de synchronisation erronée n'a d'effet que s'il survient pendant l'intervalle T4, alors qu'il n'a aucun effet s'il survient pendant l'un des intervalles T1, T2 ou T3.

Si l'impulsion de synchronisation n'arrive pas pendant l'intervalle $T4_n$, il y a erreur et la commande du triac est arrêtée. Si une impulsion de synchronisation décalée ou parasite survient pendant un intervalle $T4_{n-1}$, l'intervalle $R_n$ est différent de $R_0$ et on n'est plus dans les conditions initiales.

Pour assurer un bon fonctionnement dans des conditions différentes des conditions nominales, il est prévu selon la présente invention de mesurer chaque durée $R_{n-1}$ s'écoulant entre l'instant d'apparition de l'impulsion de synchronisation et la fin de la durée prédéterminée $T4_{n-2}$ et d'ajuster la durée de l'intervalle de temps $T1_n$ en fonction de la valeur mesurée de l'intervalle de temps $R_{n-1}$ pour adapter la commande à des glissements lents éventuels de la fréquence du secteur, cet ajustement étant réalisé de manière à minimiser l'influence d'impulsions parasites arrivant en lieu et place de l'impulsion de synchronisation pendant l'intervalle de temps $T4_{n-2}$. Pour cela, l'ajustement de la valeur de l'intervalle de temps $T1_n$ en fonction de l'intervalle de temps mesuré $R_{n-1}$ est effectué en apportant un facteur de pondération à l'influence de la mesure du temps $R_n$ pour moyenner l'effet de variations brutales éventuelles de cet intervalle de temps $R_n$.

En effet, on souhaite que le déphasage entre les impulsions de synchronisation et de commande s'adapte à des variations lentes de la période du secteur mais ne suive pas des variations brutales de la durée $R_n$ dues à l'apparition d'impulsions de synchronisation parasites.

De tels parasites sur le signal de synchronisation sont susceptibles de se produire par exemple dans le cas où l'on superpose à la tension du secteur un signal haute fréquence de télécommande de compteurs d'électricité en position jour-nuit.

Ainsi, la présente invention prévoit de mémoriser et de mettre à jour une moyenne glissante sur K cycles de valeurs $R_n$ ($R_{n-k}$ à $R_n$), cette moyenne glissante est appelée $R'_n$. A chaque nouveau cycle, on mesure $R_n$, on détermine un facteur de correction $(R_n - R'_n)/K$ et l'on corrige de ce facteur d'une part la valeur $R'_{n+1}$, d'autre part l'intervalle de temps $T1_{n+1}$ du cycle suivant.

Cette correction récursive peut s'exprimer par les formules suivantes:

$$T1_{n+1} = T1_n - (R_n - R'_n)/K ;$$
$$R'_{n+1} = R'_n + (R_n - R'_n)/K.$$

En conséquence, le variateur selon la présente invention est pratiquement insensible aux parasites ponctuels ou aléatoires mais il s'adapte à des glissements de la fréquence du secteur.

A titre d'exemple de valeurs numériques, pour une fréquence du secteur de 50.Hz, on pourra choisir comme valeurs initiales:

$R_0 = 0{,}5$ ms ;
Td = valeur fixée par l'opérateur ;
T2 = 10 ms ;
T3 = 9 ms - Td ;
T4 = 1,5 ms ; et
K = 16.

Bien entendu, ces valeurs peuvent être optimisées selon les besoins et adaptées à des fréquences de secteur différentes.

La présente invention prévoit aussi un mode particulier d'obtention des impulsions de synchronisation. On exploite la tension $V_S$ aux bornes du triac S à l'aide des résistances R1 à R5, mentionnées précédemment, qui sont calculées pour assurer le fonctionnement suivant.

Si le courant $I_L$ dans le triac S est non nul, alors la tension $V_S$ est pratiquement nulle. Le signal V1 entre les résistances R1 et R2 est à un niveau logique 1, et le signal V2 entre les résistances R3 et R4 est à un niveau logique 0. Ainsi, le signal V1 est à 1 et le signal V2 est à 0.

Si le courant $I_L$ s'annule, le triac présente à ses bornes la tension du secteur. Si on est dans une alternance positive de la tension du secteur, le point A est à un potentiel inférieur au potentiel V0, et le signal V1 est alors à un niveau logique 0. Ainsi, les signaux V1 et V2 sont tous les deux à 0.

Si on est dans une alternance négative du secteur, le point A est à un potentiel supérieur au potentiel $V_P$ de la passe P et le signal V2 est alors à un niveau logique 1. Ainsi, les signaux V1 et V2 sont tous les deux à 1.

Pour détecter les passages à zéro du courant par valeurs négatives, il suffit de détecter les instants de passage (V1 - 1, V2 = 0) à (V1 = 0, V2 = 0), ce qui est effectué par le microcontrôleur 20 pour fournir les impulsions de synchronisation.

La figure 4 représente schématiquement le microcontrôleur 20. Le procédé selon la présente invention peut être mis en oeuvre à l'aide d'un microcontrôleur simple et à faible capacité mémoire comprenant des mémoires 40, des moyens de gestion et de calcul ou microprocesseur 41, une horloge 42 et un seul compteur programmable 43. Les diverses valeurs T1, T2, T3, T4, R et R' sont initialisées et chargées dans des mémoires appropriées, et la valeur Td est obtenue au moyen d'un circuit d'interface 44 qui reçoit les signaux provenant de la touche 21 ou du potentiomètre 22, puis mémorisée.

Selon l'invention, on charge successivement dans le compteur programmable 43 les intervalles de temps $T1_n$, $T2_n$, $T3_n$ et $T4_n$ qui sont décomptés au rythme de l'horloge 42. A la fin de chacun des intervalles $T1_n$ et $T2_n$, on fournit une impulsion de commande de mise en conduction du triac S. A la fin de l'intervalle $T3_n$, on valide, pendant la durée $T4_n$, la détection d'impulsions de synchronisation. A la suite de l'arrivée de l'impulsion de synchronisation, on mémorise l'intervalle $R_{n+1}$ correspondant à la durée $T4_n$ moins le temps écoulé depuis le début du changement de l'intervalle $T4_n$ dans le compteur 43. Le microprocesseur 41 contenu dans le micrrocontrôleur assure le séquencement de ces opérations, et le calcul de la nouvelle valeur de $T1_{n+1}$ liée aux variations de $R_n$ et de $R'_n$ de la manière suivante.

Dès la détection d'une impulsion de synchronisation, dans une mémoire, la valeur $R_{n-1}$ est remplacée par la nouvelle valeur $R_n$ ; dans une autre mémoire, la valeur $R'_n$ est remplacée par la nouvelle valeur $R'_{n+1} = R'_n + (R_n - R'_n)/K$ ; et dans une autre mémoire, la valeur $T1_n$ est remplacée par la nouvelle valeur $T1_{n+1} = Td - R'_{n+1}$.

Le procédé selon la présente invention a été décrit en relation avec une période du secteur. Bien entendu, il peut être adapté pour fonctionner par demi-périodes du secteur en fournissant des impulsions de synchronisation aussi lors des passages à zéro par valeur positive du courant $I_L$ et en supprimant l'intervalle T2.

## Revendications

1. Procédé de variation de puissance pour une charge branchée sur le secteur au moyen d'un interrupteur commandé dont la commande est retardée d'un intervalle de temps de consigne (Td) par rapport à l'instant de fourniture d'une impulsion de synchronisation sur le secteur, caractérisé en ce qu'il comprend les étapes suivantes :

   a) détecter une impulsion de synchronisation, déterminant le début d'un cycle (n), dans un intervalle de temps fixe $(T4_{n-1})$ appartenant au cycle précédent (n-1) ;
   b) dès la détection de l'impulsion de synchronisation, attendre la fin de cet intervalle fixe $(T4_{n-1})$ puis décompter un premier intervalle de temps $(T1_n)$ qui se termine sensiblement à un instant correspondant à l'instant d'arrivée de l'impulsion de synchronisation additionné de l'intervalle de consigne (Td) ;
   c) à la la fin du premier intervalle $(T1_n)$, déclencher la fermeture de l'interrupteur (S) et décompter un deuxième intervalle de temps $(T2_n + T3_n)$ qui se termine avant l'arrivée normale de l'impulsion de synchronisation suivante ; et
   d) à la fin du deuxième intervalle $(T2_n + T3_n)$, décompter l'intervalle fixe $(T4_n)$ dans lequel on doit détecter l'impulsion de synchronisation suivante.

2. Procédé selon la revendication 1, caractérisé en ce que le deuxième intervalle de temps $(T2_n + T3_n)$ débute par un troisième intervalle de temps (T2n) d'une demi-période nominale (T/2) du secteur, à la fin duquel la fermeture de l'interrupteur est également déclenchée.

3. Procédé selon la revendication 1, caractérisé en ce que, à partir de l'étape b), il comprend les étapes suivantes :

   - mesurer le temps restant $(R_n)$ s'écoulant entre l'arrivée de l'impulsion de synchronisation et la fin de l'intervalle de temps fixe $(T4_{n-1})$ appartenant au cycle précédent (n-1) ;
   - calculer l'écart $(R_n - R'_n)$ entre le temps restant $(R_n)$ et une moyenne de temps restants $(R'_n)$ prise sur un nombre prédéterminé (K) de cycles précédents ; et
   - pour le cycle suivant (n+1), corriger le premier intervalle de temps $(T1_{n+1})$ d'une fraction déterminée dudit écart et calculer la nouvelle moyenne $(R'_{n+1})$.

4. Procédé selon la revendication 3, caractérisé en ce que la fraction déterminée est un $K^e$ dudit écart.

5. Procédé selon la revendication 1, caractérisé en ce que la commande de l'interrupteur (S) est arrêtée si une impulsion de synchronisation n'arrive pas pendant l'intervalle de temps fixe $(T4_n)$.

6. Dispositif pour la mise en oeuvre du procédé selon la revendication 3, caractérisé en ce qu'il est essentiellement constitué d'un microcontrôleur comprenant :

   des moyens de détection des impulsions de synchronisation (V1, V2),
   des moyens (40) pour mémoriser les premier et deuxième intervalles de temps (T1, T2+T3), l'intervalle de temps fixe (T4), le temps restant (R), l'intervalle de consigne (Td) et la moyenne (R'),
   des moyens (44, 41, 40) pour ajuster la valeur de l'intervalle de consigne (Td) en fonction de commandes externes (21, 22), et pour initialiser le temps restant (R), la moyenne (R') et les premier et deuxième intervalles (T1, T2+T3),
   un compteur programmable (43) dans lequel sont successivement chargés et décomptés au rythme d'une horloge interne (42) les premier et deuxième intervalles (T1, T2+T3) et l'intervalle de temps fixe (T4), l'état du compteur étant lu pendant l'intervalle de temps fixe (T4) pour fournir le temps restant (R), et
   des moyens de calcul (41) pour calculer la moyenne (R') en fonction des variations du temps restant (R), pour ajuster la valeur du premier intervalle (T1) en fonction de l'intervalle de consigne (Td) et de la moyenne (R'), et pour ajuster la valeur du deuxième intervalle (T2+T3) en fonction de l'intervalle de consigne (Td).

## Patentansprüche

1. Verfahren zur Leistungsänderung für eine Last, welche an das Netz mit Hilfe eines gesteuerten Schalters angeschlossen ist, dessen Ansteuerung um ein gewähltes Zeitintervall (Td) bezüglich des Zeitpunkts des Gebens eines Synchronisationsimpulses auf dem Netz verzögert ist, dadurch gekennzeichnet, daß es die folgenden Schritte umfaßt:

a) Detektieren eines Synchronisationsimpulses, welcher den Beginn eines Zyklus (n) festlegt, in einem festen Zeitintervall ($T4_{n-1}$), das zu dem vorangehenden Zyklus (n-1) gehört,
b) Abwarten des Endes dieses festen Zeitintervalls ($T4_{n-1}$) nach der Detektion des Synchronisationsimpulses und nachfolgendes Abzählen eines ersten Zeitintervalls ($T1_n$), welches ungefähr zu einem Zeitpunkt endet, welcher dem Zeitpunkt der Ankunft des Synchronisationsimpulses plus dem gewählten Intervall (Td) entspricht,
c) Auslösen des Schließens des Schalters (S) am Ende des ersten Intervalls ($T1_n$) und Abzählen eines zweiten Zeitintervalls ($T2_n+T3_n$), welches vor der normalen Ankunft des folgenden Synchronisationsimpulses endet, und
d) Abzählen des festen Intervalls ($T4_n$), in dem man den folgenden Synchronisationsimpuls detektieren muß, am Ende des zweiten Intervalls ($T2_n+T3_n$).

2. Verfahren nach Anspruch 1, dadurch gekennzeichnet, daß das zweite Zeitintervall ($T2_n+T3_n$) mit einem dritten Zeitintervall ($T2_n$) einer nominalen Halbperiode (T/2) des Netzes beginnt, an dessen Ende das Schließen des Schalters ebenfalls ausgelöst wird.

3. Verfahren nach Anspruch 1, dadurch gekennzeichnet, daß es nach dem Schritt b) die folgenden Schritte umfaßt:

- Messen der verbleibenden Zeit ($R_n$), welche zwischen der Ankunft des Synchronisationsimpulses und dem Ende des festen Zeitintervalls ($T4_{n-1}$), das zu dem vorangehenden Zyklus (n-1) gehört, verstreicht,
- Berechnen der Verschiebung ($R_n - R'_n$) zwischen der verbleibenden Zeit ($R_n$) und einem Mittelwert der verbleibenden Zeit ($R'_n$), der über eine vorbestimmte Anzahl (K) von vorangehenden Zyklen gebildet ist, und
- Korrigieren des ersten Zeitintervalls ($T1_{n+1}$) für

den folgenden Zyklus (n+1), um einen vorbestimmten Bruchteil der Verschiebung und Berechnen des neuen Mittelwerts ($R'_{n+1}$).

4. Verfahren nach Anspruch 3, dadurch gekennzeichnet, daß der vorbestimmte Bruchteil eine K-tel der Verschiebung ist.

5. Verfahren nach Anspruch 1, dadurch gekennzeichnet, daß die Ansteuerung des Schalters (S) unterbrochen wird, wenn ein Synchronisationsimpuls während des festen Zeitintervalls ($T4_n$) nicht eintrifft.

6. Vorrichtung zum Durchführen des Verfahrens nach Anspruch 3, dadurch gekennzeichnet, daß sie im wesentlichen aus einem Mikroregler besteht, welcher umfaßt:

- eine Einrichtung zum Detektieren von Synchronisationsimpulsen (V1, V2),
- eine Einrichtung (40) zum Speichern des ersten und zweiten Zeitintervalls (T1, T2 + T3), des festen Zeitintervalls (T4), der verbleibenden Zeit (R), des ausgewählten Intervalls (Td) und des Mittelwerts (R'),
- eine Einrichtung (44, 41, 40) zum Einstellen des Werts des ausgewählten Intervalls (Td) in Abhängigkeit von externen Befehlen (21, 22) und zum Initialisieren der verbleibenden Zeit (R), des Mittelwerts (R') und des ersten und zweiten Intervalls (T1, T2 + T3),
- einen programmierbaren Zähler (43), in den nacheinander das erste und das zweite Intervall (T1, T2 + T3) und das feste Zeitintervall (T4) geladen und im Takt einer inneren Uhr (42) abgezählt werden, wobei der Zählerstand während des festen Zeitintervalls (T4) gelesen wird, um die verbleibende Zeit (R) zu liefern und
- eine Recheneinrichtung (41) zum Berechnen des Mittelwerts (R') in Abhängigkeit von Variationen der verbleibenden Zeit (R), zum Einstellen des Werts des ersten Intervalls (T1) in Abhängigkeit von dem ausgewählten Intervall (Td) und dem Mittelwert (R') und zum Einstellen des Wertes des zweiten Intervalls (T2+T3) in Abhängigkeit von dem ausgewählten Intervall (Td).

## Claims

1. A method for regulating the power in a load connected to the mains through a controlled switch whose control is delayed by a selected time interval (Td) with respect to the time at which a mains synchronization pulse is provided, characterized in that it comprises the following steps:

(a) detecting a synchronization pulse, which determines the start of a cycle (n), within a fixed time interval ($T4_{n-1}$) of the preceding cycle (n-1);

(b) as soon as said synchronization pulse has been detected, waiting for the end of said fixed interval ($T4_{n-1}$), then counting down a first time interval ($T1_n$) which roughly ends at a time corresponding to the arrival time of said synchronization pulse plus said selected time interval (Td);

(c) at the end of said first time interval ($T1_n$), triggering the switch (S) on and counting down a second time interval ($T2_n+T3_n$) which ends before the normal arrival of the next synchronization pulse; and

(d) at the end of said second time interval ($T2_n+T3_n$), counting down the fixed time interval ($T4_n$) within which the next synchronization pulse must be detected.

2. A method according to claim 1, characterized in that said second time interval ($T2_n+T3_n$) starts with a third time interval ($T2_n$) having the duration of a nominal half-period (T/2) of the mains, at the end of which the on state of said switch is also triggered.

3. A method according to claim 1, characterized in that, from step (b), it comprises the following steps:

- measuring the remaining time ($R_n$) elapsing between the arrival of said synchronization pulse and the end of said fixed time interval ($T4_{n-1}$) of the preceding cycle (n-1);

- calculating the difference ($R_n-R'_n$) between said remaining time ($R_n$) and a remaining time average ($R'_n$) calculated from a predetermined number (K) of said preceding cycles; and

- for the next cycle (n+1), correcting said first time interval ($T1_{n+1}$) with a determined fraction of said difference and calculating the new average value ($R'_{n+1}$).

4. A method according to claim 3, characterized in that said determined fraction equals said difference divided by a predetermined number (K).

5. A method according to claim 1, characterized in that the control of said switch (S) is interrupted if a synchronization pulse has not arrived within said fixed time interval ($T4_n$).

6. A device for implementing the method of claim 3, characterized in that it mainly comprises a microcontroller including:

means for detecting synchronization pulses (V1, V2);

means (40) for storing the first and second time intervals (T1, T2+T3), said fixed time interval (T4), the remaining time (R), the selected time interval (Td) and said average value (R');

means (44, 41, 40) for adjusting the value of said selected time interval (Td) as a function of external control means (21, 22), and for initializing the remaining time (R), the mean value (R') and said first and second time intervals (T1, T2+T3);

a programmable counter (43) in which are successively loaded and counted down at the rate of an internal clock (42) said first and second time intervals (T1, T2+T3) and said fixed time interval (T4), the state of the counter being read during said fixed time interval (T4) in order to provide the remaining time; and

calculation means (41) for calculating the mean value (R') as a function of the variations of the remaining time (R), in order to adjust the value of said first time interval (T1) as a function of said selected time interval (Td) and mean value (R'), and to adjust the value of said second time interval (T2+T3) as a function of said selected time interval (Td).

Fig 1

Fig 2

Fig 4

Fig 3